## Europäisches Patentamt

## European Patent Office

## Office européen des brevets

(11) Publication number: **0 133 536**
**B1**

# EUROPEAN PATENT SPECIFICATION

(45) Date of publication of patent specification: **02.11.88**

(51) Int. Cl.⁴: **G 01 N 27/30**

(21) Application number: **84109062.4**

(22) Date of filing: **31.07.84**

(54) **Ion sensing electrode and methods for producing such electrodes and ion-selective membranes therefor.**

(30) Priority: **03.08.83 US 519934**
**03.08.83 US 519937**
**03.08.83 US 519938**

(43) Date of publication of application:
**27.02.85 Bulletin 85/09**

(45) Publication of the grant of the patent:
**02.11.88 Bulletin 88/44**

(84) Designated Contracting States:
**CH DE FR GB LI NL SE**

(56) References cited:
**FR-A-2 221 730**
**FR-A-2 284 632**
**GB-A-1 593 270**
**US-A-3 671 414**
**US-A-3 767 553**
**US-A-4 314 895**

(73) Proprietor: **MEDTRONIC, INC.**
**3055 Old Highway Eight**
**Minneapolis Minnesota 55440 (US)**

(72) Inventor: **Cahalan, Patrick T.**
**129 West Eagle Lake Drive**
**Maple Grove, Minn. 55369 (US)**
Inventor: **Fogt, Eric J.**
**9673 Harbor Lane**
**Maple Grove, Minn. 55369 (US)**
Inventor: **Jevne, Allan**
**1314 - 153red Lane NE**
**Anoka, Minn. 55303 (US)**
Inventor: **Schwinghammer, Michelle A.**
**7853 - 178th Avenue**
**Forest Lake, Minn. 55025 (US)**

(74) Representative: **Schwan, Gerhard, Dipl.-Ing.**
**Elfenstrasse 32**
**D-8000 München 83 (DE)**

Courier Press, Leamington Spa, England.

## 0 133 536

**Description**

This invention relates to electrodes for measuring ion concentrations in aqueous solutions and to methods of manufacturing such electrodes and the ion-selective membranes they employ.

Ion-sensing electrodes selectively responsive to ionic activities in aqueous solutions are well known to the art. The known relationship between ionic activity and ion concentration permits these electrodes to be used to measure ion concentrations. In such electrodes, selective ion exchange occurs through an interface between a selective ion exchange material and the solution to be sampled. Many recent electrode designs have employed ion-selective membranes which retain the ion-selective material in a matrix of organic material such as polyvinylchloride or other plastic.

Many prior art sensing membranes employing a plastic matrix are prepared by dissolving the ion-selective material in a solvent which either is, or has dissolved within it a plasticiser for the plastic. The plastic, in powdered form, is added to the mixture. The membrane is cast in its desired form by applying this mixture to a substrate having the desired shape and evaporating the solvent or otherwise curing the mixture. Examples of such electrodes are described in US—A—3,450 631, US—A—3 635 212, US—A—4 271 002 and US—A—4 242 191.

In some prior art electrodes, the substrate on which the ion-selective membrane is formed is incorporated as part of the electrode structure. In others, the membrane is removed from the substrate and attached to the body of the electrode. In such electrodes, sealing of the membrane to the remainder of the electrode structure has been problematic.

US—A— 4 233 136 addresses the problem of sealing the ion-selective membrane to the remainder of the electrode structure, in the context of incorporating an ion-selective membrane in the wall of a plastic tube. This method, like that of the prior art electrodes discussed above, involves dissolving powdered plastic in a volatile solvent containing a plasticizer and an ion-selective material and evaporating the solvent to form the membrane. In such an electrode, a plastic tube is provided with a lateral opening, and a cylindrical mandrel is inserted in the tube across the opening. The mixture is applied to the mandrel, filling the opening of the tube. The volatile solvent fuses the membrane to the plastic tube. After the membrane has formed, the mandrel is removed leaving the membrane in place.

US—A—3 966 580 discloses a method for producing a protein-immobilizing hydrophobic polymeric membrane by

— forming a thin membrane of a hydrophobic polymer upon an electrode by coating this electrode by dip-casting or shrink-fitting;

— soaking the polymeric membrane in a solvent system which contains, besides an appropriate solvent, an aliphatic compound having a reactive site thereon, preferably at or near one end of the hydrocarbon chain, for a period sufficient to result in swelling of the membrane;

— drying the membrane to remove the solvent leaving aliphatic groups pendant from the membrane surface, wherein the reactive compound in the solvent system preferably has a sufficient chain length to permit the reactive group to be somewhat remote from the surface of the membrane;

— immersing the dried polymeric membrane in a solution containing a compound having a protein-reactive site and another reactive site reactive with the reactive group of the aliphatic compound now attached to the membrane;

— washing the membrane and placing it in a solution containing the protein to be immobilized and

— after the protein being attached, washing off all residue of unreacted materials and further reacting the membrane with a compound to neutralize any unreacted protein-reactive. Accordingly, this method includes steps for attaching one end of a long chain organic molecule to the surface of a plastic member, wherein it is intended that the reactive group of the organic molecule so attached extends from the surface of the membrane.

A combination ion-sensing and reference electrode is known from GB—A—1 593 270. This electrode comprises a bi-lumen tube a first lumen of which is filled with electrolyte and acts as the electrolyte chamber for an ion-sensing electrode. The second lumen acts as the electrolyte chamber for a reference electrode, is exposed to a sample solution via an aperture and terminates and is sealed from the first lumen a short distance from the distal end of the tube. A porous ceramic or ion-selective glass carrier plug is fitted into the distal end of the tube. The entire surface of the plug extending beyond the distal tube end has an ion-selective plastics based membrane bound thereto by a dip casting procedure. The proximal ends of the lumens are sealed by stoppers through which each an electrode extends into the first and second lumen, respectively.

An object of the present invention is to provide a simplified method of producing ion sensing electrodes and ion-selective membranes adapted for such electrodes, which method allows the use of preformed plastic members as electrolyte chambers with integral ion selective membranes.

In conformity with the present invention a method for producing an ion sensing electrode of the type including a tube having a proximal end, a distal end, an outer wall and a first lumen, said first lumen filled with an electrolyte gel, having a first electrode within said electrolyte gel, is characterized in that said tube is preformed of a plastic to a desired shape, and in that said method includes the ordered steps of:
dissolving an ion selective material in a solvent which is a swelling agent for the plastic of which said tube is fabricated;

subsequently soaking at least a portion of said preformed tube in said solvent until said portion has swelled;

subsequently drying said tube until said solvent evaporates; and subsequently filling the first lumen of said tube with the electrolyte gel; aid method further comprising the following nonordered steps:

sealing the distal end of said first lumen of said tube; and inserting the first electrode into the first lumen of said tube.

The present invention further provides for an ion sensing electrode, comprising:

a tube having a proximal end, a distal end, an outer wall and a first lumen;

first sealing means for sealing the first lumen of said tube;

second means for sealing the first lumen of said tube proximal to said first sealing means;

first electrolyte filling the first lumen of said tube intermediate said first and second sealing means; and a first electrode inserted in the first lumen of said tube intermediate said first and second sealing means; which ion sensing electrode is characterized in that said tube is performed of plastic to a desired shape, and at least a portion of said performed tube, intermediate said first and second sealing means is impregnated with an ion selective material.

In conformity with a further aspect the present invention provides for a method for producing an ion-selective membrane of a desired plastic, having a desired shape, comprising the ordered steps of:

dissolving an ion-selective material in a solvent which is also a swelling agent for said desired plastic;

subsequently soaking a preformed member fabricated of said desired plastic and having said desired shape, in said solvent until said member swells; and subsequently removing said solvent from said member.

By the method of the present invention a tubular structure including an ion-selective membrane, for example, may more easily be produced as compared to the methods used to fabricate prior art electrodes. This method has as a major advantage that it allows the use of pre-formed, commercially available plastic products, such as single and bi-lumen tubing, to easily and simply fabricate a variety of ion-sensing electrodes. Because the plastic member is first formed to the desired shape and subsequently treated to transform a portion of the member into an ion-selective membrane, the membrane is continuous with an integral to the member and the problem of sealing the membrane to the electrode can be avoided. Further, because this method does not require use of a substrate to form the ion-selective membrane, production of the membrane in any desired shape is substantially simplified. In addition, electrodes formed using the methods set forth herein are believed superior to prior art electrodes in that their ion-selective membranes are integral to the electrode structures.

One preferred embodiment of an electrode according to the present invention uses single lumen polymer tubing to produce a simple ion-sensing electrode. Other preferred embodiments employ bi-lumen tubing to produce combination ion-sensing and reference electrodes adapted to be dipped into the sample solution. Yet other preferred embodiments employ bi-lumen tubing to easily produce ion-sensing and combination-sensing and reference flow through electrodes. The present invention allows all of the described embodiments to be easily produced relative to prior art electrodes. In addition, each described embodiment has unique and valuable features that are described in detail below.

Embodiments of the invention are described in detial below with reference to the drawings, in which

Fig. 1 shows a tubular plastic member, appropriate for use to produce an ion-selective membrane according to the present invention.

Fig. 2 shows an ion-sensing electrode incorporating an ion-selective membrane fabricated of the member of Fig. 1.

Fig. 3 sows a combination electrode employing a membrane according to the present invention, fabricated of a bi-lumen tube.

Fig. 4 shows an alternative combination electrode, also employing a membrane according to the present invention, fabricated of a bi-lumen tube.

Fig. 5 shows a flow-through ion sensing electrode employing a tubular membrane according to the present invention.

Fig. 6 shows an alternate flow-through ion-sensing electrode employing a membrane according to the present invention, fabricated of a bi-lumen tube.

Fig. 7 shows a combination flow-through electrode employing a membrane according to the present invention, also fabricated of a bi-lumen tube.

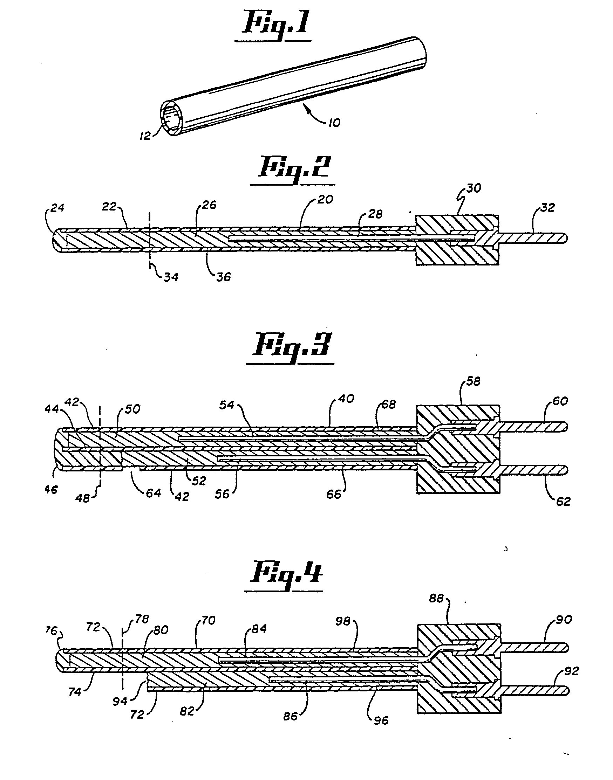

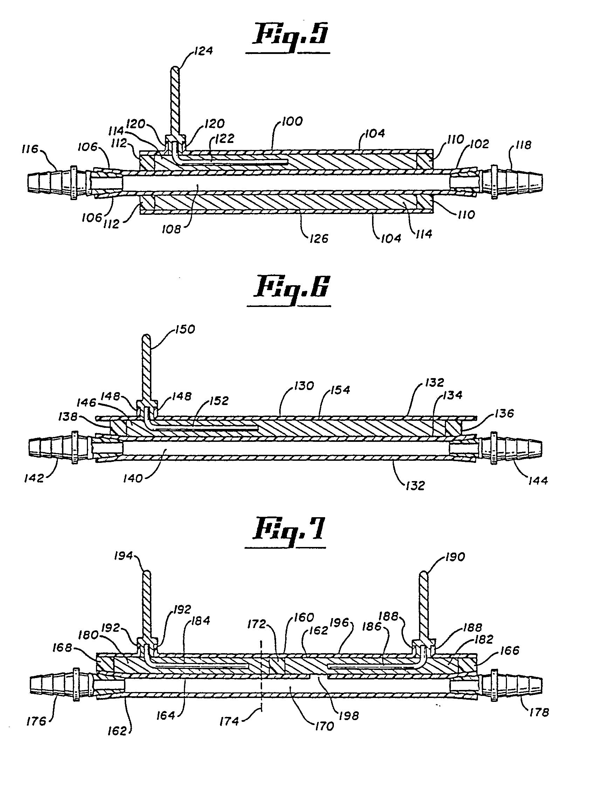

Fig. 1 shows a tubular plastic member 10 having lumen 12, appropriate for use in fabricating an ion-selective membrane according to the method of the present invention. Member 10 may be fabricated of silicone rubber, polyvinylchloride, polyurethane, or other swellable plastic. In order to transform member 10 into an ion-selective membrane, the following steps must be performed. First, member 10 must be soaked in whole or in part in a solvent in which the desired ion-selective material has been dissolved and which acts as a swelling agent for the plastic of which member 10 is constructed. Soaking should continue until member 10 has swelled, indicating incorporation of the ion-selective material. Subsequently, the solvent is removed, leaving behind the ion-selective material and allowing the swelling of member 10 to subside. Preferbaly, the solvent used should be volatile so that it may be conveniently removed by evaporation.

3

FIG. 2 illustrates a side cross sectional view of an ion-sensing electrode according to the present invention.

The ion-selective membrane of the electrode is fashioned from plastic tube 20, which has outer wall 22 impregnated with an ion-selective material, as described above. The lumen 36 of tube 20 is filled with an electrolyte solution or gel 26. The distal end of tube 20 is sealed with plug 24, which may be made of silicone rubber or other suitable material. The proximal end of tube 20 is sealed by connector block 20, which may be made of epoxy or other suitable material. Mounted within connector block 30 is connector pin 32 which is crimped to the proximal end of electrode 28. Electrode 28 may be a silver/silver chloride reference electrode, well known to the art. Connector pin 32 may be made of any conductive metal such as stainless steel. Electrolyte 26 may be any suitable electrolyte solution or gel containing chloride ion and the ion to be detected.

The above electrode is easily fashioned by first treating tube 20 as discussed in conjunction with FIG. 1 above. The entire tube may be treated, or only a portion. For example, only the portion distal to dotted line 34, may be dipped in the solvent. Following evaporation of the solvent, electrolyte 26 should be added. The additional steps of inserting electrode 28 and plug 24 and attaching connector block 30 and pin 32, may be performed in any convenient order, and may preceed the impregnation of tube 20 with the ion-selective material. Because the electrolyte chamber for the sensing electrode is fashioned integrally with the ion-selective membrane, production of the electrode of FIG 2 is considerably simplified as compared to the prior art.

The effectiveness of ion-selective membranes and ion-sensing electrodes according to the present invention is demonstrated by the following examples:

Example 1

A membrane selective for the ammonium ion ($NH_4^+$) was produced as follows:

Silicone rubber tubing of the type manufactured by Dow-Corning Chemical Co., commercially available under the trademark Silastic® was soaked in a solution of 10 mg of ammonium ion-selective material, Nonactin, an antibiotic, available from Sigma Chemical Co. of St. Louis, Missouri, dissovled in 2.3 ml of methylene chloride, until the tubing swelled. The tubing was removed from the solution and allowed to dry until it returned to its original dimensions. Three such ammonium ion-selective membranes were incorporated in ion-sensing electrodes as illustrated in FIG. 2. The ion-sensing electrodes were placed in aqueous solutions having known molar concentrations of ammonium ions, along with a reference electrode, and the voltage differences between the reference and sensing electrodes were observed. The correlation of the known molarities of the ammonium ion with the measured voltage differences, illustrated in Table 1, indicates that the ion-sensing electrodes were effective for their intended use.

### TABLE 1

| Molarity $NH_4^+$ (M) | Measured Voltages | | |
|---|---|---|---|
| | Electrode 1 (mV) | Electrode 2 (mV) | Electrode 3 (mV) |
| .1 | 150.1 | 148.7 | 140.1 |
| .01 | 97.3 | 94.5 | 87.8 |
| .001 | 43.9 | 44.9 | 34.5 |
| E° | 203.7 | 199.8 | 193.1 |
| slope | 53.1 | 51.9 | 53.3 |
| r | 1.0000 | 0.9997 | 1.000 |

Example 2

A membrane selective for potassium ion ($K^+$) was produced as follows:

A length of polyvinylchloride tubing was soaked in a solution of 10 mg of the potassium ion-selective material valimomycin dissolved in 2.5 ml dipentyl phthalate (DPP) available from Eastman Kodak Chemical Co., until the tubing swelled. The tubing was removed and dried for 16 hours at 70°C. Two such potassium ion-selective membranes were incorporated in ion-sensing electrodes as illustrated in FIG. 2. The ion-sensing electrodes were placed in solutions having known concentrations of potassium ions, along with reference electrodes. The voltage differences between the ion-sensing electrodes and the reference electrodes, illustrated in Table 2, indicate that the ion-sensing electrodes were effective for their intended use.

## TABLE 2

| Molarity $K^+$ (M) | Measured Voltages | |
|---|---|---|
| | Electrode 1 (mV) | Electrode 2 (mV |
| $1.0 \times 10^{-3}$ | -68.0 | -71.6 |
| $4.0 \times 10^{-3}$ | -32.1 | -37.4 |
| $6.0 \times 10^{-3}$ | -22.2 | -26.5 |
| $E°$ | 109.2 | 101.3 |
| slope | 59.1 | 57.7 |
| r | 0.9999 | 0.9999 |

A smilar procedure was used to fabricate potassium selective membranes from polyurethane tubing.

Example 3

A membrane selective for the potassium ion ($K^+$) was produced as follows:

A length of tubing extruded from the polyurethane available under the trade designation Pellathane®, from Upjohn, was soaked in a solution of 10.0 mg valinomycin and approximately .1 mg potassium tetraphenyl borate dissolved in 2.0 ml acetone until the tubing swelled. The tubing was removed from the solution and allowed to dry until the tubing returned to its original dimensions. Two such potassium ion-selective membranes were incorporated in ion-sensing electrodes as illustrated in FIG. 2. The ion-sensing electrodes along with a reference electrode were placed in an aqueous solution having a known molar concentration of potassium ions, to which known increments of a .1 M potassium solution were added, and the voltage differences between the reference and sensing electrodes were observed. The correlation of the known molarities of the potassium ions with the measured voltage differences, illustrated in Table 3, indicates that the ion-sensing electrodes were effective for their intended use.

## TABLE 3

| Molarity $K^+$ (M) | Measured Voltages | |
|---|---|---|
| | Electrode 1 (mV) | Electrode 2 (mV) |
| $9.9 \times 10^{-4}$ | -44.9 | -41.0 |
| $2.0 \times 10^{-3}$ | -32.9 | -29.9 |
| $3.8 \times 10^{-3}$ | -20.1 | -17.2 |
| $5.7 \times 10^{-3}$ | -12.2 | -9.6 |
| $9.1 \times 10^{-3}$ | -2.7 | -0.8 |
| $1.2 \times 10^{-2}$ | +3.2 | +4.2 |
| $E°$ | 92.9 | 89.5 |
| slope | 44.3 | 42.0 |
| r | 0.9998 | 0.9998 |

Example 4

A membrane selective for the chloride ion (Cl⁻) was produced as follows:

A length of silicone rubber tubing as described in Example 1, above, was soaked in a solution of one part by volume of the chloride ion-selective material methyl tricapryl ammonium chloride, commercially available from General Mills Co. under the trade designation Aliquat® to two parts by volume of Xylene. The tubing was soaked for about one day and then vacuum dried. The Xylene was found to come off easily, but a surface residue of Aliquat remained which was removed by washing with additional Xylene. Two such membranes were incorporated in ion-sensing electrodes as illusrated in FIG. 2. These sensing electrodes were placed in aqueous solutions having known concentrations of chloride ion, and tested as described in Examples 1 and 2 above. The results, illustrated in Table 4, indicate that the ion-sensing electrodes were effective for their intended use.

0 133 536

## TABLE 4

| Molarity Cl⁻ (M) | Measured Voltages | |
| --- | --- | --- |
| | Electrode 1 (mV) | Electrode 2 (mV) |
| .1 | 55.9 | 81.5 |
| .01 | 99.4 | 128.8 |
| .001 | 137.8 | 169.8 |
| E° | 15.8 | 38.9 |
| slope | -40.9 | -44.2 |
| r | .9994 | .9992 |

### Example 5

A membrane appropriate for use in a pH sensing electrode was produced as follows:

A length of silicone rubber tubing as described above was soaked in a solution of one part by volume of tridodecylamine to two parts by volume of Freon until the tubing swelled. The tube was allowed to air dry until it returned to its original dimensions. Three such membranes were incorporated in ion sensing electrodes as illustrated in FIG. 2, using a pH4 buffer containing NaCl as an electrolyte. These pH sensing electrodes were placed in solutions having known pH, and tested as described in the examples above. The results, illustrated in Table 5, indicate that the ion-sensing electrodes were effective for their intended use.

## TABLE 5

| pH | Measured Voltages | | |
| --- | --- | --- | --- |
| | Electrode 1 (mV) | Electrode 2 (mV) | Electrode 3 (mV) |
| 6 | -133.3 | -132.1 | -144.6 |
| 7 | -190.8 | -184.8 | -189.8 |
| 8 | -241.6 | -240.5 | -242.8 |
| E° | 190.1 | 193.6 | 151.3 |
| slope | 54.1 | 54.2 | 49.1 |
| r | .9996 | .9949 | .9990 |

FIG. 3 illustrates a side sectional view of a combination ion-sensing and reference electrode according to the present invention. The ion-selective membrane is fashioned from bi-lumen plastic tube 40, of which the portion distal to dotted line 48 is impregnated with an ion-selective material, using the process described above. The first lumen 68 of tube 40 is filled with electrolyte 50, and acts as the electrolyte chamber for the ion-sensing electrode. Second lumen 66 is filled with electrolyte 52, and acts as the electrolyte chamber for the refernce electrode. Electrolyte 52 is exposed to the sample solution via aperture 64. The distal ends of lumens 66 and 68 are sealed by plug 46 which may be made of silicone rubber or other suitable material. The proximal ends of lumens 66 and 68 are sealed by connector block 58, which may be made of epoxy or other suitable material. Mounted within connector block 58 are connector pins 60 and 62, which are crimped to the proximal ends of electrodes 54 and 56. Electrodes 54 and 56 may be silver/silver chloride reference electrodes, well known to the art. Connector pins 60 and 62 may be made of any conductive metal such as stainless steel. Electrolytes 50 and 52 should contain silver and chloride ions, along with the ion to be detected. Because electrolyte 52 is exposed to the sample solution, it is desirable that it be a gel electrolyte. A preferred gel is discussed below.

**0 133 536**

The above electrode is fashioned by treating tube 40, distil to dotted line 48, as discussed in conjunction with FIG. 1 above, by dipped the distal end of tube 40 into the solvent. Following evaporation of the solvent, electrolyte 50 and 52 should be added. The additional steps of inserting electrodes 54 and 56, attaching connector block 58, attached connector pins 60 and 62, inserting plug 46, and forming aperture 64 may be performed in any convenient order, and may preceed the impregnation of tube 40 with the ion-selective material. Aperture 64 may be produced by simply placing a hole in a portion of outer tube wall 42, opening lumen 66 to the exterior of tube wall 42 and allowing free migration of ions from the soluton to be tested into electrolyte 52. It is important to note that aperture 64 is located proximal to dotted line 48, and that plug 46 extends proximal to dotted line 48, thereby providing a seal intermediate the electrolyte contained within lumen 66 and the portion of tube 40 which has been impregnated with the ion-selective material. The seal is desirable to prevent migration ions between the lumens which would interfere with the efficiency of the electrode. Because the electrolyte chambers for both the sensing electrode and the reference electrode are fashioned integrally with the ion-selective membrane, production of the electrode of FIG. 3 is considerably simplified as compared to the prior art.

Example 6

A combination potassium selective electrode and reference electrode was produced as follows:

A length of bi-lumen silicone rubber tubing was soaked in a solution of 10 mg valinomycin and 2.5 ml of Xylene until the tubing swelled. The tubing was removed from the solution and allowed to dry until the tubing returned to its original dimensions. Combination electrodes as illustrated in FIG. 3 were fabricated from this tubing. The combination electrodes were placed in aqueous solutions having known molar concentrations of potassium ions, and the voltage differences between the potassium sensing electrode and the reference electrode were observed. The correlation of the known molarities of the potassium ion with the measured voltage differences, illustrated in Table 6 indicates that the combination electrodes were effective for their intended use:

### TABLE 6

| | | Measured Voltages | |
|---|---|---|---|
| Molarity $K^+$ (M) | Electrode 1 (mV) | Electrode 2 (mV) | Electrode 3 (mV) |
| $1 \times 10^{-3}$ | -152.1 | -108.6 | -118.4 |
| $4 \times 10^{-3}$ | -117.7 | -74.3 | -84.1 |
| $6 \times 10^{-3}$ | -108.2 | -64.0 | -74.6 |
| $E°$ | 38.9 | 5.8 | 5.4 |
| slope | 56.7 | 57.2 | 56.5 |
| r | 0.9999 | 0.9999 | 0.9999 |

Fig. 4 illustrates a side sectional view of a combination ion-sensing and reference electrode according to the present invention. Like the electrode of FIG. 3, this electrode is fashioned from a bi-lumen plastic tube 70. That portion of tube 70 which is distal to dotted line 78 is impregnated with an ion-selective material.

Only the distal end of lumen 98, which serves as the electrolyte chamber for the ion-sensing electrode, is sealed by means of plug 76, which may be made of silicone rubber or other suitable plastic. The distal end of lumen 96 remains open to the exterior of tube 70, via aperture 94. Lumen 96 serves as the electrolyte chamber for the reference electrode portion. Electrodeds 84 and 86, connector block 88, and connector pins 90 and 92 are identical to the corresponding elements in FIG. 3, above.

The above electrode is fashioned by treating bi-lumen tube 70 distal to dotted line 78 as discussed in conjunction with FIG. 1 above. This may be accomplished by dipping only that portion of tube 70 distal to dotted line 78 in the solvent. Following the evaporation of the solvent, electrolyte 80 and 82 should be added. Electrolyte 80 and 82 correspond to electrolyte 50 and 52 of FIG. 3. The additional steps of inserting electrodes 84 and 86, attaching connector block 88, inserting plug 76 and attaching connector pins 90 and 92, may be performed in any convenient order, and may proceed the impregnation of tube 70 with the ion-selective material. It is important to note that lumen 96 does not extend distal to dotted line 78. As such, no portion of inner wall 74 which is impregnated with the ion-selective material, is exposed to lumen 96, preventing transfer of ions between lumens. Bi-lumen tube 70 may be conveniently fabricated by removing a portion of the outer tube wall surrounding lumen 96, intermediate the distal end of tube 70 and a point proximal to dotted line 78. Because the electrolyte chambers for both the sensing and reference electrodes are fashioned integrally with the ion-selective membrane, production of the electrode of FIG. 4 is considerably simplified as compared to the prior art. Further, the removal of a portion of the outer wall,

7

surrounding lumen 96 to prevent selective ion transfer between lumens 96 and 98 is believed to be both easier to accomplish and more effective than the structure of FIG. 3, which requires that plug 46 tightly seal lumen 66 distal to aperture 64. Leakage of this seal could result in selective ion transfer between lumens 68 and 66. There is no corresponding seal in the structure of FIG. 4, and possibilities of malfunction of the electrode due to seal leakage are therefore believed to be reduced.

FIG. 5 illustrates a side sectional view of a flow through ion-sensing electrode. The ion-selective membrane of the electrode is fashioned from plastic tube 102, which has outer wall 106 impregnated with an ion-selective material, as described above. Tube 102 also serves as the sample tube for the electrode. Located coaxially around tube 102 is outer tube 100, which may be conveniently made of any appropriate plastic. The proximal and distal ends of tube 100 are sealed around tube 102 by means of sealing disks 110 and 112, respectively. That portion of lumen 126 of tube 100 intermediate tube wall 104 of tube 100 and tube wall 106 of tube 102 is filled with electrolyte 114. Electrolyte 114 corresponds to electrolyte 26 of FIG. 2. The proximal and distal ends of tube 102 are coupled to fluid couplings 118 and 116, respectively. Fluid couplings 116 and 118 may be any appropriate fluid coulings adapted for use with plastic or rubber tubing. Electrode 122 and connector pin 124 are identical to the corresponding elements in the Figures above. Securing connector pin 124 to tube 100 is tubular sleeve 120, which may be fashioned of an appropriate plastic or other material.

The above electrode is fashioned by first treating tube 102 as discussed in conjunction with FIG. 1 above. The entire tube, or only a portion may be treated. Following evaporation of the solvent, tube 100 and sealing disks 110 and 112 are added. The elctrolyte 114 may then be conveniently added, however, there is no criticality in the order of the steps. The steps of inserting electrode 122 and attaching connector pin 124 and tubular sleeve 120 are similarly not critical to the manufacture of this device. Because the sensing membrane is formed integrally with the sample tube of the flow through electrode, production of the electrode of FIG. 5 is considerably simplified as compared to the prior art.

FIG. 6 illustrates a side sectional view of a preferred embodiment of a flow-through ion-sensing electrode according to the present invention. The ion-selective membrane of the electrode is fashioned from bi-lumen polymer plastic tube 130, which has at least inner wall 134 impregnated with an ion-selective material, as described above. Lumen 154 of tube 130 is filled with electrolyte 146, which corresponds to electrolyte 26 of FIG. 2. Sealing the proximal and distal ends respectively of lumen 154 are plugs 136 and 138, which may be conveniently fashioned of silicone rubber or other suitable material. Lumen 140 of tube 130 serves as the sample tube for the electrode. Coupled to the proximal and distal ends of lumen 140 are fluid couplings 142 and 144 respectively. Fluid couplings 142 and 144 are identical to the corresponding structures shown in FIG. 5. Electrode 152, connector pin 150, and tubular sleeve 148 correspond to the identically named structures in FIG. 5 above.

The above electrode is fashioned by first treating a bi-lumen tube 130 as discussed in conjunction with FIG. 1 above. The entire tube may be treated, or only a portion thereof. Following the evaporation of the solvent, electrolyte 146 should be added. The additional steps of inserting plugs 136 and 138, inserting electrode 152, attaching circular sleeve 148 and connector pin 150, and inserting fluid couplings 142 and 144 may be performed in any convenient order, and may preceed the impregnation of tube 130 with the ion-selective material. Because the electrolyte chamber and the sample tube of this electrode are fashioned integrally with the ion-selective membrane, production of the electrode of FIG. 6 is considerably simplified as compared to prior art electrodes.

FIG. 7 illustrates a side sectional view of a combination of ion-sensing and reference flow-through electrodes according to the present invention. The ion-selective membrane of the electrode is fashioned from bi-lumen plastic tube 160, of which at least inner wall 164 is impregnated with an ion-selective material, distal to dotted line 174. The proximal and distal ends of lumen 196 of tube 160 are sealed by means of plugs 166 and 168 respectively. In addition, lumen 196 is sealed centrally by means of plug 172. The portion of lumen 196 distal to plug 172 serves as the electrolyte chamber for the ion-sensing electrode. That portion of lumen 196 located proximal to plug 172 serves as the electrolyte chamber for the reference electrode. Inner wall 164 is provided with aperture 198, exposing electrolyte 182 to lumen 170, which serves as the sample tube for the electrode. Electrolyte 180 and 182 correspond to electrolyte 50 and 52 of FIG. 3. Coupled to the promimal and distal ends of lumen 170 are fluid couplings 178 and 176, respectively, which are idential to the corresponding structures in FIGs. 5 and 6. Similarly, electrodes 184 and 186, tubular sleeves 192 and 188, and connector pins 190 and 194 are identical to the corresponding structures having the same names in FIGs. 5 and 6.

The above electrode is fashioned by treating a bi-lumen tube 160 as discussed in conjunction with FIG. 1 above. Only the portion of the tube distal to dotted line 174 should be impregnated with the ion-selective material. Following evaporation of the solvent, electrolyte 180 and 182 should be inserted in lumen 196. The additional steps of inserting plugs 166, 168 and 172, fluid couplings 176 and 178, connector pins 190 and 194, circular sleeves 188 and 192, and electrodes 184 and 186, along with the step of cutting aperture 198, may be performed in any convenient order and may proceed the impregnation of tube 160 with the ion-selective material. Because the electrolyte chambers for both the sensing and reference electrodes of the present invention, along with the sample tube, are all constructed integrally with the ion selective membrane, production of the electrode of FIG. 7 is considerably simplified as compared to the prior art. It is important to note that seal 172 is located proximal to dotted line 174, so that ion transfer between the sensing and reference chambers is precluded.

With regard to the electrodes of FIGs. 6 and 7, the construction of such electrodes, using commercially available bi-lumen plastic tubing provides the opportunity for arranging any number of ion-sensing and reference electrodes within a single unified tubular structure. Such a multiple electrode structure is believed within the scope of the present invention.

And electrolyte gel appropriate for use in all of the above embodiments, but especially useful in the embodiments of FIGs. 3, 4 and 6, may comprise a polyvinyl alcohol gel comprising (by weight) 7% polyvinylalcohol, 92.5% water, and .5% concentrated (18M) sulfuric acid as a polymerizing agent. The gel should be saturated with silver chloride, and be provided with electrolytes including the ion to be sensed. For example, electrolyte levels of .15M NaCl and .1MKCl would be appropriate in a chloride ion sensing electrode. The gel may be stabilized by including .025% (by weight) gluteraldehyde as a cross linking agent. Such a gel is a stable, non-swelling, non-erroding gel, suitable for use with the above described electrodes. In addition, such a gel is capable of withstanding flexing without crumbling. These characteristics are especially desirable in a gel used with the above electrodes, because the gel is exposed directly to the sample solution in the reference electrode portions of the electrodes shown in FIGs. 3, 4, and 7.

Although several embodiments of the invention have been disclosed herein, it will be understood that the embodiments disclosed may be subjected to various changes, modifications and substitutions without departing from the scope of the invention as defined by the appended claims.

We claim:

## Claims

1. A method for producing an ion sensing electrode of the type including a tube (20, 40, 70, 100, 130, 160) having a proximal end, a distal end, an outer wall (22, 42, 72, 104, 132, 162) and a first lumen (36, 68, 98, 126, 154, 196), said first lumen filled with an electrolyte gel (26, 50, 80, 114, 146, 180), and having a first electrode (28, 54, 84, 122, 152, 184) within said electrolyte gel, is characterized in that said tube is preformed of a plastic to a desired shape, and in that said method includes the ordered steps of:
dissolving an ion selective material in a solvent which is a swelling agent for the plastic of which said tube is fabricated;
subsequently soaking at least a portion of said preformed tube in said solvent until said portion has swelled;
subsequently drying said tube until said solvent evaporates; and subsequently filling the first lumen of said tube with the electrolyte gel;
said method further comprising the following nonordered steps:
sealing the distal end of said first lumen of said tube; and inserting the first electrode into the first lumen of said tube.

2. A method for producing an ion-sensing electrode as set forth in claim 1, wherein said tube (40, 70, 160) has a second lumen (66, 96, 196) separated from said first lumen (68, 98, 196) by an inner wall (44, 74, 172) wherein said filling step includes filling the second lumen of said tube with electrolyte, and further comprising the following non-ordered step:
inserting a second electrode (56, 86, 186) into the second lumen of said tube.

3. A method for producing an ion sensing electrode as set forth in claim 2, wherein said soaking step consists of soaking only a portion of said tube (40, 70, 160) distal to a first point (48, 78, 174) in said solvent, and further comprising the following non-ordered steps:
providing an aperture (64, 94, 198) in the wall of said tube at a second point proximal to said first point, opening the second lumen (66, 96, 196) of said tube to the exterior of said tube; and
sealing the second lumen of said tube intermediate said first and second points.

4. A method for producing an ion sensing electrode according to claim 1, wherein said tube (100, 130, 160) has a second lumen (108, 140, 170) separated from said first lumen (126, 154, 196) by an inner wall (106, 134, 164), and wherein said sealing step includes sealing the distal end of the first lumen of said tube at a first point distal to at least a part of said portion of said tube, and further includes sealing said first lumen at a second point proximal to at least a part of said portion of said tube, and wherein said inserting step includes inserting an electrode (122, 152, 184) into the first lumen of said tube intermediate said first and second points.

5. A method for producing an ion sensing electrode according to claim 4, wherein said soaking step consists of soaking only a portion of said tube (160) distal to a third point (174) intermediate the proximal and distal ends of said tube, and further comprising the following nonordered steps:
providing an aperture (198) in the inner wall (164) of said tube at a fourth point proximal to said third point, opening the first lumen (196) of said tube to the second lumen (170) of said tube;
sealing the first lumen of said tube at a fifth point intermediate said third and fourth points; and
inserting a second electrode (186) in the first lumen of said tube intermediate said second point and said fifth point.

6. Method for producing an ion sensing electrode according to claim 1, wherein said tube (70) has a first lumen (98), a second lumen (96), an outer wall (72) and an inner wall (74) separating said first and

0 133 536

second lumens, and wherein said soaking step includes soaking said tube only distal to a first point (78) intermediate the proximal and distal ends of said tube, said method further comprising the following nonordered steps:

removing that portion of the outer wall (72) of said tube located exterior to said second lumen (96), intermediate the distal end of said tube and a second point proximal to said first point (78);

sealing the distal end of the first lumen (98) of said tube; and

inserting first and second electrodes (84, 86) into the first and second lumens of said tube.

7. An ion sensing electrode, comprising: a tube (20, 40, 70, 100, 130, 160) having a proximal end, a distal end, an outer wall (22, 42, 72, 104, 132, 162) and a first lumen (36, 68, 98, 126, 154, 196); first sealing means (24, 46, 76, 112, 138, 168) for sealing the first lumen of said tube; second means (30, 58, 88, 110, 136, 172) for sealing the first lumen of said tube proximal to said first sealing means; first electrolyte (26, 50, 80, 114, 146, 180) filling the first lumen of said tube intermediate said first and second sealing means; and a first electrode (28, 54, 84, 122, 152, 184) inserted in the first lumen of said tube intermediate said first and second sealing means; characterized in that tube is preformed of plastic to a desired shape, and at least a portion of said performed tube, intermediate said first and second sealing means is impregnated with an ion selective material.

8. An ion-sensing electrode according to claim 7, wherein said plastic tube (40, 70, 160) has a second lumen (66, 96, 196) and an inner wall (44, 74, 172) separating the first lumen (68, 98, 196) of said tube and the second lumen of said tube, and further comprising:

third sealing means (58, 88, 166) for sealing the second lumen of said tube proximal to the impregnated portion of said tube;

second electrolyte (52, 82, 182) filling the second lumen of said tube distal to said third sealing means and exposed to the exterior of said tube; and

a second electrode (56, 86, 186) inserted within the second lumen of said tube in contact with said second electrolyte.

9. An ion-sensing electrode according to claim 8, wherein said tube (40, 160) is impregnated with said ion-selective material only distal to a first point (48, 174), and wherein the outer wall (42, 164) of said tube is provided with an aperture (64, 198) at a second point, proximal to said first point, opening the second lumen of said tube to the exterior of said tube and further comprising:

fourth sealing means (46, 172) for sealing the second lumen of said tube intermediate said first and second points.

10. An ion-sensing electrode according to claim 7, wherein said tube (100, 130, 160) further has a second lumen (108, 140, 170); and an inner wall (106, 134, 164) separating said first lumen (126, 154, 196) from said second lumen, and wherein said portion of said tube impregnated with an ion selective material includes at least a part of said inner wall.

11. An ion-sensing electrode according to claim 10, wherein said tube (160) is impregnated with said ion selective material only distal to a first point (174) intermediate the proximal and distal ends of said tube and wherein the inner wall (164) of asid tube is provided with an aperture (198) at a second point proximal to said first point, opening the first lumen (196) of said tube to the second lumen (170) of said tube, and further comprising:

third sealing means (172) for sealing the first lumen of said tube intermediate said first and second points, proximal to said first electrode (184); and

a second electrode (186) inserted in the first lumen intermediate said second and third sealing means (166, 172).

12. An ion sensing electrode according to claim 7, wherein said plastic tube (70) is of the type having a proximal end, a distal end, a first lumen (98), a second lumen (96), and a tube wall (72) surrounding and defining said first and second lumens, said first lumen extending to the distal end of said tube, said second lumen extending only to a first point proximal to the distal end of said tube, said tube wall of said plastic tube impregnated with an ion selective material only from the distal end of said tube to a second point (78) distal to said first point, further comprising electrode gel (82) filling said second lumen (96); and

a second electrode (86) inserted in the second lumen of said tube.

13. A method for producing an ion-selective membrane of a desired plastic, having a desired shape, comprising the ordered steps of: dissolving an ion-selective material in a solvent which is also a swelling agent for said desired plastic;

subsequently soaking a preformed member (10, 20, 40, 70, 102, 130, 160) fabricated of said desired plastic and having said desired shape, in said solvent until said member swells; and subsequently removing said solvent from said member.

14. A method according to claim 13, wherein said desired plastic is silicone rubber.

15. A method according to claim 13, wherein said desired plastic is polyurethane.

16. A method according to claim 13, wherein said desired plastic is polyvinylchloride.

17. A method according to claim 14, wherein said ion-selective material comprises nonactin and wherein said solvent comprises methylene chloride.

18. A method according to claim 14, wherein said ion-selective material comprises Aliquat and wherein said solvent comprises xylene.

10

19. A method according to claim 14, wherein said ion-selective material comprises tridodecylamine and wherein said solvent comprises Freon.

20. A method according to claim 15, wherein said ion-selective material comprises valinomycin and wherein said solvent comprises acetone.

21. A method according to claim 20, wherein said ion-selective material further comprises potassium tetraphenylborate.

22. A method according to claim 16, wherein said ion-selective material comprises valinomycin and wherein said solvent comprises dipentyl phthalate.

23. A method according to any one of claims 13 to 22, wherein said desired shape comprises a tube.

24. A method according to any one of claims 13 to 24, wherein said solvent is volatile and wherein said removing step comprises drying said member (10, 20, 40, 70, 102, 130, 160), to cause said solvent to evaporate.

**Patentansprüche**

1. Verfahren zum Herstellen einer Ionenmeßelektrode mit einem Rohr (20, 40, 70, 100, 130, 160), das ein proximales Ende, ein distales Ende, eine Außenwand (22, 42, 72, 104, 132, 162) und ein erstes Lumen (36, 68, 98, 126, 154, 196) aufweist, das mit einem Elektrolytgel (26, 50, 80, 114, 146, 180) gefüllt ist, sowie mit einer ersten Elektrode (28, 54, 84, 122, 152, 184) innerhalb des Elektrolygels, dadurch gekennzeichnet, daß das Rohr aus einem Kunststoff in einer gewünschten Form vorgeformt wird und daß das Verfahren die geordnete Schrittfolge:
Auflösen eines ionenselektiven Materials in einem Lösungsmittel, das ein Quellmittel für den Kunststoff ist, aus welchem das Rohr gefertigt ist;
danach Tränken mindestens eines Teils des vorgeformten Rohres in dem Lösungsmittel, bis dieser Teil aufgequollen ist;
danach Trocknen des Rohres, bis das Lösungsmittel verdampft; und danach Füllen des ersten Lumens des Rohres mit dem Elektrolytgel;
sowie die folgenden nichtgeordneten Schritte:
Abdichten des distalen Endes des ersten Lumens des Rohres; und Einsetzen der ersten Elektrode in das erste Lumen des Rohres umfaßt.

2. Verfahren zum Herstellen einer Ionenmeßelektrode nach Anspruch 1, wobei das Rohr (40, 70, 160) ein zweites Lumen (66, 96, 196) aufweist, das von dem ersten Lumen (68, 98, 196) durch eine Innenwand (44, 74, 172) getrennt ist, wobei der Füllvorgang das Füllen des zweiten Lumens des Rohres mit Elektrolyt einschließt und wobei der folgende nichtgeordnete Verfahrensschritt vorgesehen ist:
Einsetzen einer zweiten Elektrode (56, 86, 186) in das zweite Lumen des Rohres.

3. Verfahren zum Herstellen einer Ionenmeßelektrode nach Anspruch 2, wobei der Tränkvorgang darin besteht, daß nur ein distal bezüglich einer ersten Stelle (48, 78, 174) liegender Teil des Rohres (40, 70, 160) in dem Lösungsmittel getränkt wird, und wobei die foglenden nichtgeordneten Schritte vorgesehen sind:
Bereitstellen einer Öffnung (64, 94, 198) in der Wand des Rohres an einer proximal zu der ersten Stelle liegenden zweiten Stelle, über welche Öffnung das zweite Lumen (66, 96, 196) des Rohres zu dem Außenraum des Rohres hin offen ist; und
Abdichten des zweiten Lumens des Rohres zwischen der ersten und der zweiten Stelle.

4. Verfahren zum Herstellen einer Ionenmeßelektrode nach Anspruch 1, wobei das Rohr (100, 130, 160) ein zweites Lumen (108, 140, 170) aufweist, das von dem ersten Lumen (126, 154, 196) durch eine Innenwand (106, 135, 164) getrennt ist, wobei der Abdichtvorgang das Abdichten des distalen Endes des ersten Lumens des Rohres an einer ersten Stelle, die distal bezüglich mindestens eines Abschnittes des Teils des Rohres liegt, und Abdichten des ersten Lumens an einer zweiten Stelle umfaßt, die proximal bezüglich mindestens eines Abschnittes des Teils des Rohrs liegt, und wobei im Zuge des Einsetzvorganges eine Elektrode (122, 152, 184) in das erste Lumen des Rohres zwischen der ersten und der zweiten Stelle eingesetzt wird.

5. Verfahren zum Herstellen einer Ionenmeßelektrode nach Anspruch 4, wobei der Tränkvorgang darin besteht, daß nur ein Teil des Rohres (160), der distal bezüglich einer dritten Stelle (174) zwischen dem proximalen und dem distalen Ende des Rohres liegt, getränkt wird, und wobei ferner die folgenden nichtgeordneten Schritte vorgesehen sind:
Vorsehen einer Öffnung (198) in der Innenwand (164) des Rohres an einer proximal bezüglich der dritten Stelle liegenden vierten Stelle, über welche Öffnung das erste Lumen (196) des Rohres zu dem zweiten Lumen (170) des Rohres offen ist;
Abdichten des ersten Lumens des Rohres an einer fünften Stelle zwischen der dritten und der vierten Stelle; sowie
Einsetzen einer zweiten Elektrode (186) in das erste Lumen des Rohres zwischen der zweiten und der fünften Stelle.

6. Verfahren zum Herstellen einer Ionenmeßelektrode nach Anspruch 1, wobei das Rohr (70) ein erstes Lumen (98), ein zweites Lumen (96), eine Außenwand (72) und eine das erste und das zweite Lumen trennende Innenwand (74) aufweist, wobei im Zuge des Tränkvorganges das Rohr nur distal bezüglich einer zwischen dem proximalen und dem distalen Ende des Rohres liegenden ersten Stelle (78) getränkt wird, und wobei ferner die folgenden nichtgeordneten Schritte vorgesehen sind:

Beseitigen des außerhalb des zweiten Lumens (96) liegenden Teils der Außenwand (72) des Rohres der sich zwischen dem distalen Ende des Rohres und einer proximal bezüglich der ersten Stelle (78) liegenden zweiten Stelle befindet;

Abdichten des distalen Endes des ersten Lumens (98) des Rohres; und Einsetzen einer ersten und einer zweiten Elektrode (84, 86) in das erste und das zweite Lumen des Rohres.

7. Ionenmeßelektrode mit:

einem Rohr (20, 40, 100, 130, 160), das ein proximales Ende, ein distales Ende, eine Außenwand (22, 42, 72, 104, 132, 162) und ein erstes Lumen (36, 68, 98, 126, 154, 196) aufweist;

einer ersten Dichtanordnung (24, 46, 76, 112, 138, 168) zum Abdichten des ersten Lumens des Rohres;

einer zweiten Anordnung (30, 58, 88, 110, 136, 172) zum Abdichten des ersten Lumens des Rohres proximal bezüglich der ersten Dichtanordnung;

einem ersten Elektrolyten (26, 50, 80, 114, 146, 180), der das erste Lumen des Rohres zwischen der ersten und zweiten Dichtanordnung ausfüllt; und

einer ersten Elektrode (28, 54, 84, 122, 152, 184), die in das erste Lumen des Rohres zwischen der ersten und der zweiten Dichtanordnung eingesetzt ist, dadurch gekennzeichnet, daß das Rohr aus Kunststoff in eine gewünschte Form vorgeformt ist und mindestens ein Teil des vorgeformten Rohres zwischen der ersten und der zweiten Dichtanordnung mit einem ionenselektiven Material imprägniert ist.

8. Ionenmeßelektrode nach Anspruch 7, wobei das Kunststoffrohr (40, 70, 160) ein zweites Lumen (66, 96, 196) und eine Innenwand (44, 74, 172) aufweist, die das erste Lumen (68, 98, 196) des Rohres von dem zweiten Lumen des Rohres trennt, und wobei ferner vorgesehen sind:

eine dritte Dichtanordnung (58, 88, 166) zum Abdichten des zweiten Lumens des Rohres proximal zu dem imprägnierten Teil des Rohres; ein zweiter Elektrolyt (52, 82, 182), der das zweite Lumen des Rohres distal bezüglich der dritten Dichtanordnung ausfüllt und der dem Außenraum des Rohres ausgesetzt ist; und eine zweite Elektrode (56, 86, 186), die in das zweite Lumen des Rohres in Kontakt mit dem zweiten Elektrolyten eingesetzt ist.

9. Ionenmeßelektrode nach Anspruch 8, wobei das Rohr (40, 160) mit dem ionenselektiven Material nur distal bezüglich einer ersten Stelle (48, 174) imprägniert ist, wobei die Außenwand (42, 164) des Rohres an einer proximal bezüglich der ersten Stelle liegenden zweiten Stelle mit einer Öffnung (64, 198) versehen ist, die das zweite Lumen des Rohres zum Außenraum des Rohres hin öffnet, und wobei ferner vorgesehen ist:

eine Vierte Dichtanordnung (46, 172) zum Abdichten des Zweiten Lumens des Rohres zwischen der ersten Stelle und der zweiten Stelle.

10. Ionenmeßelektrode nach Anspruch 7, wobei das Rohr (100, 130, 160) ein zweites Lumen (108, 140, 170) und eine Innenwand (106, 134, 164) aufweist, welche das erste Lumen (126, 154, 196) von dem zweiten Lumen trennt, und wobei der mit einem ionenselektiven Material getränkte Teil des Rohres mindestens einen Abschnitt der Innenwand umfaßt.

11. Ionenmeßelektrode nach Anspruch 10, wobei das Rohr (160) mit dem ionenselektiven Material nur distal bezüglich einer ersten Stelle (174) imprägniert ist, die zwischen dem proximalen und dem distlen Ende des Rohres liegt, und wobei die Innenwand (164) des Rohres an einer proximal bezüglich der ersten Stelle liegenden zweiten Stelle mit einer Öffnung (198) versehen ist, die das erste Lumen (196) des Rohres zu dem zweiten Lumen (170) des Rohres öffnet, und wobei ferner vorgesehen sind:

eine dritte Dichtanordnung (172) zum Abdichten des ersten Lumens des Rohres zwischen der ersten und der zweiten Stelle sowie promimal bezüglich der ersten Elektrode (184); und

eine zweite Elektrode (186), die in das erste Lumen zwischen der zweiten und der dritten Dichtanordnung (166, 172) eingesetzt ist.

12. Ionenmeßelektrode nach Anspruch 7, wobei das Kunststoffrohr (70) ein proximales Ende, ein distales Ende, ein erstes Lumen (98), ein zweites Lumen (96) und eine Rohrwand (72) aufweist, die das erste und das zweite Lumen umgibt und diese Lumen begrenzt, wobei das erste Lumen dis zu dem distalen Ende des Rohres reicht, das zweite Lumen sich nur bis zu einer ersten Stelle erstreckt, die proximal bezüglich dem distalen Ende des Rohres liegt, die Rohrwand des Kunststoffrohres mit einem ionenselektiven Material nur von dem distalen Ende des Rohres bis zu einer zweiten Stelle (78) imgrägniert ist, die distal bezüglich der ersten Stelle liegt, und wobei ferner ein das zweite Lumen (96) ausfüllendes Elektrodengel (82) sowie eine in das zweite Lumen des Rohres eingesetzte zweite Elektrode (86) vorgesehen sind.

13. Verfahren zum Herstellen einer ionenselektiven Membran aus einem gewünschten Kunstoff und mit einer gewünschten Form, mit der geordneten Schrittfolge:

Auflösen eines ionenselektiven Materials in einem Lösungsmittel, das auch ein Quellmittel für den gewünschten Kunststoff ist;

danach Tränken eines aus dem gewünschten Kunststoff hergestellten und die gewünschte Form aufweisenden vorgeformten Bauteils (10, 20, 40, 70, 102, 130, 160) in dem Lösungsmittel bis das Bauteil aufquillt; und

danach Besteitigen des Lösungsmittels vom dem Bauteil.

14. Verfahren nach Anspruch 13, wobei der gewünschte Kunststoff Silikongummi ist.

15. Verfahren nach Anspruch 13, wobei der gewünschte Kunststoff Polyurethan ist.

16. Verfahren nach Anspruch 13, wobei der gewünschte Kunststoff Polyvinylchlorid ist.

17. Verfahren nach Anspruch 14, wobei das ionenselektive Material Nonaktin aufweist und das Lösungsmittel Methylenchlorid aufweist.

18. Verfahren nach Anspruch 14, wobei das ionenselektive Material Aliquat und das Lösungsmittel Xylol aufweist.

19. Verfahren nach Anspruch 14, wobei das ionenselektive Material Tridodecylamin und das Lösungsmittel Freon aufweist.

20. Verfahren nach Anspruch 15, wobei das ionenselektive Material Valinomycin und das Lösungsmittel Aceton aufweist.

21. Verfahren nach Anspruch 20, wobei das ionenselektive Material ferner Kaliumtetraphenylborat aufweist.

22. Verfahren nach Anspruch 16, wobei das ionenselektive Material Valinomycin und das Lösungsmittel Dipentylphthalat aufweist.

23. Verfahren nach einem der Ansprüche 13 bis 22, wobei die gewünschte Forme ein Rohr ist.

24. Verfahren nach einem der Ansprüche 13 bis 23, wobei das Lösungsmittel flüchtig ist und wobei im Zuge des Beseitigungsvorganges das Bauteil (10, 20, 40, 70, 102, 130, 160) getrocknet wird, um das Lösungsmittel zum Verdampfen zu bringen.

**Revendications**

1. Procédé de fabrication d'une électrode de détection ionique, du type qui comprend un tube (20, 40, 70, 100, 130, 160) ayant und extrémité proximale, une extrémité distale, une paroi externe (22, 42, 72, 104, 132, 162) et un premier passage (36, 68, 98, 126, 154, 196), le premier passage étant rempli d'un gel électrolyte (26, 50, 80, 114, 146, 180), et ayant une première électrode (28, 54, 84, 122, 152, 184) placée dans le gel électrolyte, caractérisé en ce que le tube est formé préalablement d'une matière plastique ayant la configuration voulue, et en ce que le procédé comprend les étapes suivantes, dans l'ordre indiqué:
— la dissolution d'un matériau à sélectivité ionique dans un solvant qui est un agent gonflant de la matière plastique dont le tube est formé,
— l'imprégnation ultérieure d'une partie au moins du tube préalablement formé dans le solvant jusqu'à ce que cette partie ait gonflé,
— le séchange ultérieur du tube jusqu'à ce que le solvant s'évapore, et
— le remplissage ultérieur du premier passage du tube par le gel électrolyte,
le procédé comprenant en outre les étapes suivantes, dans un ordre quelconque:
— la fermeture étanche de l'extrémité distale du premier passage du tube, et
— l'introduction de la première électrode dans le premier passage du tube.

2. Procédé de préparation d'une électrode de détection ionique selon la revendication 1, dans lequel le tube (40, 70, 160) a un second passage (66, 96, 196) séparé du premier (68, 98, 196) par une paroi interne (44, 74, 172), dans lequel l'étape de remplissage comprend le remplissage du second passage du tube par un électrolyte, et comprenant en outre l'étape suivante exécutée à un moment quelconque:
— l'introduction d'une seconde électrode (56, 86, 186) dans la second passage du tube.

3. Procédé de fabrication d'une électrode de détection ionique selon la revendication 2, dans lequel l'étape de trempage comprend le trempage d'une partie seulement du tube (40, 70, 160) distale à un premier point (48, 78, 174) dans le solvant, et comprenant en outre les étapes suivantes, exécutées dans un ordre quelconque:
— la formation d'une ouverture (64, 94, 198) dans la paroi du tube à un second point proximal au premier point, faisant communiquer le second passage (66, 96, 196) du tube avec l'extérieur du tube, et
— la fermeture étanche du second passge du tube entre le premier et le second point.

4. Procédé de fabrication d'une électrode de détection ionique selon la revendication 1, dans lequel le tube (100, 130, 160) a un second passage (108, 140, 170) séparé du premier passage (126, 154, 196) par une paroi interne (106, 134, 164), et dans lequel l'étape de fermeture étanche comprend la fermeture étanche de l'extrémité distale du premier passage du tube en un premier point distal à une portion au moins de ladite partie du tube, et il comprend en outre la fermeture étanche du premier passage en un second point proximal à une portion au moins de ladite partie de tube, et dans lequel l'étape d'introduction comprend l'introduction d'une électrode (122, 152, 184) dans le premier passage du tube entre le premier et le second point.

5. Procédé de fabrication d'une électrode de détection ionique selon la revendication 4, dans lequel l'étape de trempage comprend le trempage d'une partie seulement du tube (160) distale à un troisième point compris entre les extrémités proximale et distale du tube, et comprenant en outre les étapes suivantes réalisées dans un ordre quelconque:
— la formation d'une ouverture (198) dans la paroi interne (164) du tube en un quatrième point placé vers l'intérieur par rapport au troisième point, l'ouverture faisant communiquer le premier passage (196) du tube avec le second passage (170) de tube,
— la fermeture étanche du premier passage du tube en un cinquième point compris entre le troisième et le quatrième point, et
— l'introduction d'une seconde électrode (186) dans le premier pasasge du tube entre le second point et le cinquième point.

**0 133 536**

6. Procédé de fabrication d'une électrode de détection ionique selon la revendication 1, dans lequel le tube (70) a un premier passage (98), un second passage (96), une paroi externe (72) et une paroi interne (74) séparant le premier et le second passage, et dans lequel l'étape de trempage ne comprend le trempage du tube qu'à une partie distale à un premier point (78) compris entre les extrémités proximale et distale du tube, le procédé comprenant en outre les étapes suivantes, exécutées dans un ordre quelconque:

— l'enlèvement de la partie de paroi externe (72) du tube placée à l'extérieur du second passage (96) entre l'extrémité distale du tube et un second point proximal au premier point (78),

— la fermeture étanche de l'extrémité distale du premier passage (98); du tube, et

— l'introduction de la première et de la seconde électrode (84, 86) dans le premier et le second passage du tube.

7. Electrode de détection ionique, comprenant:

— un tube (20, 40, 70, 100, 130, 160) ayant une extrémité proximale, une extrémité distale, une paroi externe (22, 42, 72, 104, 132, 162) et un premier passage (36, 68, 98, 126, 154, 196),

— un premier dispositif (24, 46, 76, 112, 138, 168) de fermeture étanche du premier passage de tube,

— un second dispositif (30, 58, 88, 110, 136, 172) de fermeture étanche du premier passage du tube vers l'intérieur par rapport au premier dispositif de fermeture étanche,

— un premier électrolyte (26, 50, 80, 114, 146, 180) remplissant le premier passage du tube entre le premier et le second dispositif de fermeture étanche, et

— une première électrode (28, 54, 84, 122, 152, 184) introduite dans le premier passage du tube entre le premier et le second dispositif de fermeture étanche,

caractérisée en ce que le tube est préalablement formé d'une matière plastique à la configuration voulue et une partie au moins du tube préalablement formé, entre le premier et le second dispositif de fermeture étanche, est imprégnée d'un matériau à sélectivité ionique.

8. Electrode de détection ionique selon la revendication 7, dans laquelle le tube de matière plastique (40, 70, 160) a un second passage (66, 96, 196) et une paroi interne (44, 74, 172) séparant le premier passage (68, 98, 196) du tube et le second passage du tube, et comprenant en outre:

— un troisième dispositif (58, 88, 166) de fermeture étanche du seconde passage du tube proximal à la partie imprégnée du tube,

— un second électrolyte (56, 82, 182) remplissant le second passage du tube vers l'extérieur par rapport au troisième dispositif de fermeture étanche et exposé à l'extérieur du tube, et

— une seconde électrode (52, 86, 186) introduite dans le second passge du tube au contact du second électrolyte.

9. Electrode de détection ionique selon la revendication 8, dans laquelle le tube (40, 160) n'est imprégné du matériau à sélectivité ionique qu'à une partie distale au premier point (48, 74), et dans laquelle la paroi externe (42, 164) du tube a une ouverture (64, 198) qui est en un second point proximal au premier point et qui assure la communication du second pasage du tube avec l'extérieur du tube, et comprenant en outre:

— un quatrième dispositif (46, 172) de fermeture étanche du second passage du tube entre le premier et le second point.

10. Electrode de détection ionique selon la revendication 7, dans laquelle le tube (100, 130, 160) a en outre un second passage (108, 140, 170) et une paroi interne (106, 134, 164) séparant le premier passage (126, 154, 196) du second passage, et dans laquelle ladite partie du tube imprégnée d'un matériau à sélectivité ionique comporte une partie au moins de la paroi interne.

11. Electrode de détection ionique selon la revendication 10, dans laquelle le tube (160) est imprégné du matériau à sélectivité ionique uniquement à l'extérieur par rapport à un premier point (174) compris entre les extrémités proximale et distale du tube, et dans laquelle la paroi interne (164) du tube a une ouverture (198) en un second point placé vers l'intérieur par rapport au premier point et faisant communiquer le premier passage (196) du tube avec la second passage (170) du tube et comprenant en outre:

— un troisième dispositif (172) de fermeture étanche du premier passage du tube entre le premier et le second point, proximals à la première électrode (184), et

— une second électrode (186) introduite dans le premier passage entre le second et le troisième dispositif (166, 172) de fermeture étanche.

12. Electrode de détection ionique selon la revendication 7, dans laquelle le tube de matière plastique (70) est d'un type ayant une extrémité proximale, une extrémité distale, un premier passage (98), un second passage (96) et une paroi (72) du tube qui entoure le premier et le second passage et les délimite, le premier passage rejoignant l'extrémité distale du tube, le second passage rejoignnant uniquement un premier point proximal à l'extrémité distale du tube, la paroi du tube de matière plastique étant imprégnée d'un matériau à sélectivé ionique uniquement de l'extrémité distale du tube à un second point (78) distal au premier point, et comprenant en outre un gel d'électrolyte (82) remplissant le second passage (96) et

— une seconde électrode (86) introduit dans le second passage du tube.

13. Procédé de fabrication d'une membrane à sélectivité ionique formée d'une matière plastique voulue, ayant une configuration voulue, comprenant les étapes suivantes, dans l'ordre indiqué:

— la dissolution d'un matérieur à sélectivité ionique dans un solvant qui est aussi un agent gonflant de la matière plastique voulue,

# 0 133 536

— le trempage ultérieur d'un organe préalablement formé (10, 20, 40, 70, 102, 130, 160) constitué de la matière plastique voulue et ayant la configuration voulue, dans le solvant, jusqu'à ce que l'organe gonfle, et

— l'extraction ultérieur du solvant de l'organe.

14. Procédé selon la revendication 13, dans lequel la matière plastique voulue est un caoutchouc de silicone.

15. Procédé selon la revendication 13, dans lequel la matière plastique voulue est un polyuréthane.

16. Procédé selon la revendication 13, dans lequel la matière plastique voulue est le chlorure de polyvinyle.

17. Procédé selon la revendication 14, dans lequel le matériau à sélectivité ionique est la nonactine et dans lequel le solvant comprend le chlorure de méthylène.

18. Procédé selon la revendication 14, dans lequel le matériau à sélectivité ionique est l'"Aliquat" et le solvant comprend le xylène.

19. Procédé selon la revendication 14, dans lequel le matériau à sélectivité ionique est la tridodécylamine, et le solvant comprend le "Freon".

20. Procédé selon la revendication 15, dans lequel le matériau à sélectivité ionique est la valinomycine et le solvant comprend l'acétone.

21. Procédé selon la revendication 20, dans lequel le matériau à sélectivité ionique contient en outre du tétraphénylborate de potassium.

22. Procédé selon la revendication 16, dans lequel le matériau à sélectivité ionique est la valinomycine et le solvant comprend le phtalate de dipentyle.

23. Procédé selon l'une quelconque des revendications 13 à 22, dans lequel la configuration voulue comprend un tube.

24. Procédé selon l'une quelconque des revendications 13 à 24, dans lequel le solvant est volatil et dans lequel l'étape d'extraction comprend le séchage de l'organe (10, 20, 40, 70, 102, 130, 160) afin que le solvant s'évapore.

15

0 133 536

## _Fig.1_

## _Fig.2_

## _Fig.3_

## _Fig.4_

1

*Fig.5*

*Fig.6*

*Fig.7*